# EUROPEAN PATENT APPLICATION

(11) **EP 1 601 036 A1**
(43) Date of publication of application: **30.11.2005**
(21) Application number: 05291130.2
(22) Date of filing: 26.05.2005
(51) Int. Cl.: H01M 4/88, H01M 8/02, C08K 5/151, C08K 5/10, H01M 2/08

(54) **Novel sealant material for electrochemical cell components**

(30) Priority: 28.05.2004 US 575284 P; 19.07.2004 US 588943 P
(71) Applicant: Du Pont Canada Inc., Mississauga, Ontario L5M 2H3 (CA)
(72) Inventor: Andrin, Peter, Napanee Ontario K7R 3X4 (CA); Choudhury, Biswajit, Kingston Ontario K7M 7K9 (CA); Perti, Deepak, Hockessin Delaware 19707 (US); Hojabr, Sassan, Kingston Ontario K7P 3G1 (CA); Brunk, Donald H., Boothwyn Pennsylvania 19601 (US); Harding, Scott L., New Castle Delaware 19720 (US)
(74) Representative: Hirsch & Associés

(57) **Abstract**

Multipurpose sealing adhesive materials for sealing different components of an electrochemical cell are provided. The sealing materials are acid, acid anhydride, acid ester or metallocene modified polyolefins that are capable of providing multiple sealing functionalities in a heat activated sealing process. These sealing polymers are capable of adhering to plain and textured metal, graphite and graphite-filled polymer composite separator plates.

## Description

### FIELD OF THE INVENTION

The present invention relates to novel sealant materials that can provide multiple sealing functionalities in a single step sealing process for uniting different components of an electrochemical cell, such as fuel cell and water electrolyzers.

### BACKGROUND OF THE INVENTION

Electrochemical cells comprising polymer electrolyte membranes (PEMs) can be operated as fuel cells wherein a fuel and an oxidant are electrochemically converted at the electrodes to produce electrical power, or as electrolyzers wherein an external current is passed between the electrodes, typically through water, to produce hydrogen and oxygen at the respective electrodes on the cell.

Electrochemical cells with an ion-conductive PEM layer, hereafter called PEM cells, typically employ a membrane electrode assembly (MEA) consisting of a solid polymer electrolyte or ion exchange membrane disposed between two electrode layers that are typically porous and electrically conductive. The electrode layers comprise an electrocatalyst at the interface with the adjacent PEM layers for promoting electrochemical reaction. The electrocatalyst generally defines the electrochemically active area of the PEM cell. The membrane acts as an ion conductive (typically proton conductive) material as well as a barrier for isolating the reactant streams between both reaction chambers. The MEA is typically consolidated as a bonded laminated assembly. In an individual cell, the MEA is typically interposed between two separator plates that are typically fluid impermeable and electrically conductive. The separator plates are typically manufactured from metals, such as certain grades of steel or alloy or surface treated metals, non-metals such as graphite or from electrically conductive polymer composite materials. Fluid flow channels or grooves or passageways are provided in the face of the separator plate facing the electrode to facilitate access of reactants to the electrodes and removal of reaction byproducts. Separator plates comprising such channels are commonly referred to as flow field plates, which can be of either monopolar or bipolar configuration, depending on the design of the individual cell. In conventional PEM cells, resilient seals or gaskets are typically provided between faces of the MEA and each separator plate around the perimeter to prevent leakage of fluid reactant and product streams.

Electrochemical cells with an ion-conductive PEM layer are stacked together to form a stack comprising a plurality of cells disposed between a pair of end plates. A compression mechanism is typically employed to hold the cells tightly together, maintain good electrical contact between components and to compress seals to provide a leak-free stack configuration. Cooling plates may be provided conveniently between some or all of the adjacent pairs of separator plates, depending on the design and configuration of the electrochemical cell stack. The coolant plates may include flow field channels, grooves or passageways to transport coolant within the electrochemical cell stack to remove excess heat and maintain operation temperature of the stack.

The cell components described have openings, typically known as manifold holes, which in a stacked assembly, align to form fluid manifolds for supply and exhaust of reactants and products, and if cooling separator plates are provided, for a cooling fluid. Resilient gaskets or seals are typically provided between the faces of the MEA and each separator plate around the perimeter of these fluid manifold openings to prevent leakage and intermixing of fluid streams in the operating stack. Gaskets applied along the periphery of the bi-polar and coolant plates and along the periphery of the manifold holes are fixed to the bi-polar plates or MEA using a suitable adhesive, such as that described in U.S. Patent No. 6,338,492 B1 and EP 0665984 B1. The gaskets may also be formed in the channels or grooves provided on the bi-polar plate, coolant plate, or MEA.

Conventional PEM sealing mechanisms generally employ resilient gaskets or seals made of elastomeric materials, which are typically disposed in grooves in the separator plates or around the MEAs. Examples are described in U.S. Patent numbers 5,176,966 and 5,284,718, incorporated here as reference. Edge sealing of MEAs using elastomeric materials have been discussed in U.S. Patent 6,057,054 and U.S. Patent Application number 2002/0110720. Use of thermoplastic polymer adhesive tapes or films in combination with various types of foam tapes to create sealed electrochemical cell assembly have been described in U.S. Patent numbers 6,080,503; 5,187,025; 5,523,175; 5,264,299. Application of curable seal material by injecting it into the groove network of an assembled electrochemical cell stack has been disclosed in WO 02/093672. The most common type of sealant used in solid polymer electrolyte fuel cells are gaskets made of silicone rubber, RTV, E-RTV, or like materials. Gaskets of this type are disclosed in WO 02/093672 A2, U.S. Patent No. 6,337,120 and U.S. Patent Application Nos. 2002/0064703, 2001/0055708 and 2002/0068797.

There are several disadvantages associated with using sealant materials such a silicone rubber, silicone foam tape, RTV, E-RTV, thermoplastic adhesive tapes to seal the periphery and manifold areas of the bi-polar plates and coolant plates. Over the course of an electrochemical cell's service life, gaskets and seals made of these materials are subjected to prolonged deformation and sometimes a harsh operating environment. Over time such gaskets or seals tend to decrease in resilience, typically due to chemical degradation and compression set, and may become permanently deformed. The degradation and deformation of the sealing material impacts negatively on the sealing function and can ultimately lead to leakage in the electrochemical cell.

The inconsistency in flatness of the separator plates and thickness variation of the sealing bead or gasket typically results in ineffective sealing of the electrochemical cell. Separator plates sealed with such gasket or seal materials will experience high deformation of the plate as the full force of pressure on the sealing area of the plate is applied to achieve uniform sealing around the periphery of the plate. Moreover, an uneven sealing pressure force distribution along the length of the stack, with a minimum in the center, can be observed in stacks using such sealing mechanism. Thus, the sealing elements of the electrochemical cells are typically exposed to higher pressure in the end plate areas in order to guarantee adequate sealing performance in the center cells of the stack. Increased sealing pressure applied to the electrochemical cells in the end plate areas may then lead to increased deformations of the plate and a shorter life of the sealing material.

The assembly of a PEM cell stack, which comprises a plurality of PEM cells each having many separate sealing gaskets fitted to or formed on the various components, is challenging. This requires sealing gaskets with different physical and chemical properties, such as elasticity, tackiness, compressibility, oxidative stability depending on the application area of the electrochemical cell.

The material compatibility of the sealant material with the plate material used in the electrochemical cell, which may be graphite, graphite composites or metals, are also an important factor in achieving long-lasting seals. Most of the elastomeric materials used for sealing electrochemical cells are compressible, soft materials, which can be easily deformed to the desired shape of the sealing periphery or groove of the separator plate to create maximum sealing performance. During the compression of seals against the sealing surface, a physical contact between the sealing surface of the separator plate and the sealing material is developed and the effectiveness of this sealing contact is dependent on the applied sealing force across the end plates.

The adhesive tape sealant materials get adhered to the separator plate surface and create a permanent seal with the plate. The durability of these types of seals depends on the stability of the base material and the adhesive material in harsh operational environment of the electrochemical cell. Typically the adhesive materials tend to degrade under operational condition of the electrochemical cell and their adhesion property is destroyed. Moreover, it is difficult to conduct precision work around the narrow sealing surfaces of the separator plates with these adhesive materials, as they tend to stick to undesirable locations during their application to the electrochemical cell components.

Different types of adhesive tapes are often used to seal different cell components, such as separator plates, membrane, gas diffusion layers, of the electrochemical cell, due to the inability of a single material to perform all the sealing performances required in an electrochemical cell. Such types of sealing materials and processes have been discussed in U.S. Patent Nos. 6,020,083 and 6,440,597. Applying different sealing gaskets is labour-intensive, costly and generally unsuited to high-volume manufacture due to the multitude of parts and assembly steps required. Further, in the design and manufacture of PEM cells, to achieve the desired specifications, such as increased power density, there is a desire to make the individual cell elements thinner. Therefore, there will be finer dimensional tolerances required for such thin cell elements and it will become more difficult to design gaskets which will maintain high dimensional tolerances. Moreover, it will be challenging to use multiple gaskets made of different sealing materials in the same location to achieve desired sealing action. One sealing material, instead of multiple materials, will be advantageous for designing sealing gaskets with higher dimensional tolerances to provide required sealing action.

The polymer electrolyte membrane in an electrochemical cell undergoes tremendous stress and hence significant expansion and contraction during the operation of the cell. This membrane stress creates pressure point around the joining area of the membrane and seal material, which typically fails. A related problem and a proposed solution have been disclosed in U.S. Patent No. 6, 440,597. Resilient sealing materials are typically useful for accommodating the stress caused by the membrane and reduce membrane failure around the seal area.

Application of any gasket material as sealant between a coolant plate and another coolant plate or bipolar plate often leads to the loss in conductivity between these two joined plates. Being insulators, most of these gasket materials are designed to minimize the loss of conductivity and often this leads to the use of thin gasket material. The thin gasket material is often vulnerable to mechanical failure under high stress fuel cell operational condition. Significant research work is underway to determine a compromise between the gasket thickness and conductivity loss to achieve desired fuel cell longevity and durability.

There, therefore, remains a need to provide superior sealing materials for different components of an electrochemical cell, such as bi-polar plate, coolant plates, membrane, which reduces the disadvantages associated with conventional sealing materials and their application techniques.

The disclosures of all patents/applications referenced herein are incorporated herein by reference.

### SUMMARY OF THE INVENTION

The present invention relates to polyolefin-based, heat-activated adhesive sealant materials that can be used in a sealing process for uniting different components of an electrochemical cell, such as a fuel cell and a water electrolyzer.

According to a first aspect of the invention, there is provided the use in an electrochemical cell of a heat-activated adhesive sealant material to seal two or more components of the electrochemical cell to each other, wherein the heat-activated adhesive sealant material comprises a polyolefin modified with an acid, an acid anhydride, an acid ester or a metallocene.

According to another aspect of the invention, there is provided an electrochemical cell in which two heat-activated components are sealed to each other with a heat-activated sealant material comprising a polyolefin modified with an acid, an acid anhydride, an acid ester or a metallocene.

According to a further aspect of the invention, there is provided a sub-assembly for use in an electrochemical cell, wherein the sub-assembly comprises at least two components sealed to each other with a heat-activated sealant material comprising a polyolefin modified with an acid, an acid anhydride, an acid ester or a metallocene.

According to yet another aspect of the invention, there is provided a process for making a sub-assembly for use in an electrochemical cell comprising the step of sealing at least two components to each other with a heat-activated sealant material comprising a polyolefin modified with an acid, an acid anhydride, an acid ester or a metallocene.

In preferred aspects of the present invention, the polyolefin is selected from the group consisting of high-density polyethylene (HDPE), linear low-density polyethylene (LLDPE), low-density polyethylene (LDPE), ultra low-density polyethylene (ULDPE), high low-density polypropylene (HDPP), low-density polypropylene (LDPP), and mixtures thereof.

Numerous other objectives, advantages and features of this sealing adhesive materials and their application process will also become apparent to the person skilled in the art upon reading the detailed description of the preferred embodiments, the examples and the claims.

### BRIEF DESCRIPTION OF THE DRAWINGS

The preferred embodiments of the present invention will be described with reference to the accompanying drawings in which like numerals refer to the same parts in the several views and in which:

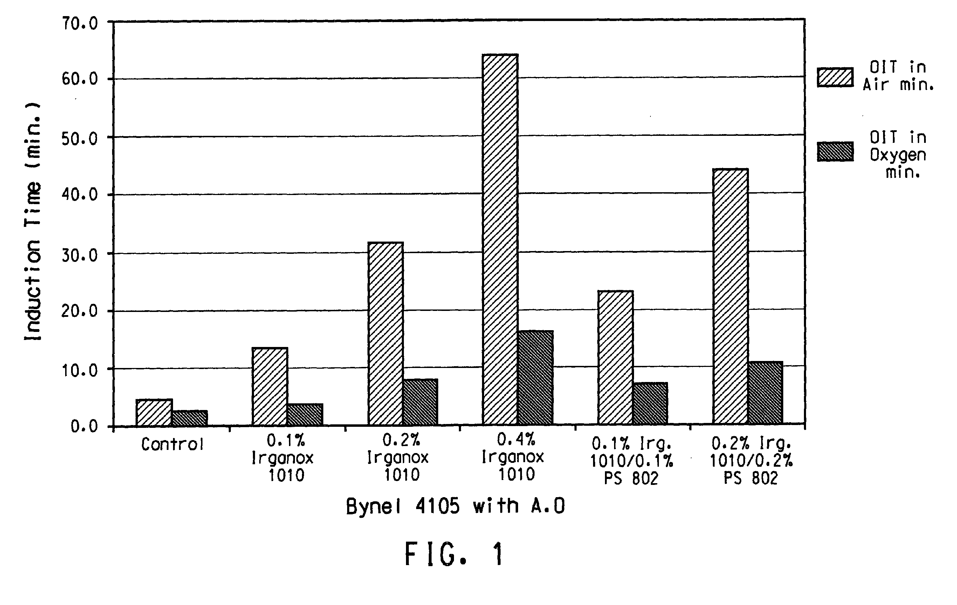

Figure 1 is a chart illustrating the effect of antioxidants on Oxygen Induction Time in air and oxygen.

### DETAILED DESCRIPTION OF THE PREFERRED EMBODIMENTS

The preferred embodiments of the present invention provide sealant materials for use in electrochemical cells that comprise modified polyolefins possessing heat-activated adhesion properties. The adhesive sealant materials provide multiple sealing functionalities in a heat activated sealing process for uniting two components of an electrochemical cell to each other. In the preferred embodiments of the present invention, there is no need to use other sealing materials such as silicone foam, silicone rubber, RTV, E-RTV, glue etc., in conjunction with the adhesive sealant materials disclosed herein for sealing two or more electrochemical cell components to each other.

The preferred adhesive sealant materials of the present invention are physically and chemically stable within an electrochemical cell environment and are compatible with other cell components. The preferred adhesive sealant materials are also compatible with the reactant, product and coolant streams in the cell-operating environment. For example, the adhesive sealant materials are preferably compatible with the electrocatalyst and polymer electrolyte membrane, particularly if the sealant materials will be in direct contact with the membrane and/or electrodes. For contact with MEA and/or reactants, sealant materials which are substantially ion-impermeable, or at least have low ion permeability, and which are stable in an acidic environment are preferred.

The adhesive sealant materials may form a rigid bond or a resilient bond, depending on the specific nature of the material. The sealant materials may be selected to be resilient or rigid depending on the components to be bonded. For example, if the adhesive sealant material is sealing a separator plate to an adjacent separator plate in a series-connected fuel cell stack, a rigid sealant material will generally be preferred. However, if the adhesive sealant material encapsulates the edge portion of the membrane and interconnects the anode and cathode electrodes and plates of a single PEM cell, the adhesive sealant material should preferably be an electrically insulating resilient adhesive to avoid short-circuiting the cell and to accommodate the stress experienced by the membrane during electrochemical cell operation.

### Polyolefin Definition

In the adhesive sealant materials of the present invention, "polyolefin" means homopolymers of olefins, copolymers of olefins and copolymers of olefins with non-olefins. More specifically, homopolymers include polymers consisting of a single unsaturated olefin such as polyethylene, polypropylene, polybutene or the like where the olefin has 2-20 carbon atoms. Copolymers of olefins include polymers consisting of one or more unsaturated or multiply unsaturated hydrocarbons having 2-20 carbon atoms. Examples include, but are not limited to ethylene/propylene copolymers, ethylene/butene copolymers, ethylene/hexene copolymers, ethylene/octene copolymers, ethylene/styrene copolymers, ethylene/butene/octene copolymers, ethylene/propylene/norbornadiene copolymers and propylene/butene copolymers. Non-olefins that can be copolymerized with olefins, principally ethylene, include but are not limited to: vinyl acetate, acrylate or methacrylate esters having 1-20 carbon atoms, unsaturated anhydrides such as maleic or itaconic anhydride, unsaturated acids such as maleic, fumaric, acrylic, methacrylic or itaconic acid. Examples of copolymers of olefins and non-olefins include, but are not limited to: ethylene/vinyl acetate, ethylene/methylacrylate, ethylene/butylacrylate. These polymers can be made by processes well known in the art, including the use of metallocene catalysts, Ziegler Natta catalysts and other catalysts useful in "low pressure" polymerization processes. Conversely, these polymers may be made in "high pressure" polymerization processes using, for example, free radical initiators. Mixtures and blends of the polyolefins may be used.

In preferred embodiments, the polyolefin is selected from the group consisting of high-density polyethylene (HDPE), linear low-density polyethylene (LLDPE), low-density polyethylene (LDPE), ultra low-density polyethylene (ULDPE), high low-density polypropylene (HDPP), low-density polypropylene (LDPP), and mixtures thereof.

### Modified Polyolefin

The term "modified polyolefin" refers to a polyolefin as described above, or to a mixture or blend of polyolefins, modified with an acid, an acid anhydride, an acid ester or a metallocene. Preferably, the polyolefin has grafted onto it at least one monomer selected from ethylenically unsaturated carboxylic acids and ethylenically unsaturated carboxylic acid anhydrides, including less preferably, derivatives of such acids, and mixtures thereof. Examples of the acids and anhydrides, which may be mono-, di- or polycarboxylic acids are acrylic acid, methacrylic acid, maleic acid, fumaric acid, itaconic acid, crotonic acid, itaconic anhydride, maleic anhydride and substituted maleic anhydride, e.g. dimethyl maleic anhydride or citrotonic anhydride, nadic anhydride, nadic methyl anhydride, and tetrahydrophthalic anhydride, maleic anhydride being particularly preferred. Examples of the derivatives of the unsaturated acids are salts, amides, imides and esters, e.g., mono- and disodium maleate, acrylamide, glycidyl methacrylate and dimethyl fumarate. Grafted polyolefins are well known in the art and can be produced by a variety of processes including thermal grafting in an extruder or other mixing device, grafting in solution or grafting in a fluidized bed reactor. Blends or mixtures of grafted polyolefins may also be used.

In preferred embodiments of the present invention, acid, acid anhydride, acid ester and metallocene modified polyolefin adhesive sealant materials are used as sealing adhesive materials in electrochemical cells. Commercially available modified polyolefins include Bynel® 4105, Bynel® 40E529, Bynel® 50E561, Fusabond® 511 D, all manufactured by E. I. Du Pont de Nemours & Company, Inc. Wilmington, DE; Engage® 8402 manufactured by DuPont Dow Elastomers L.L.C., Wilmington, DE; Sclair® 2318, Sclair® HDPE-19A manufactured by NOVA Chemicals Corporation, Calgary, Alberta, Canada; PRIEX® 11006, PRIEX® 12030, PRIEX® 63108 and PRIEX® 63208, manufactured by Solvay, Netherlands; and Profax® SB823 manufactured by Basell, Netherlands. Also useful are acid, acid ester, acid anhydride and metallocene functionalised polyolefin adhesives manufactured by E. I. Du Pont de Nemours & Company, Inc. Wilmington, DE, and described in U.S. Patent Nos. 4,861,677; 5,643,999 and 6,545,091, which are hereby incorporated by reference. For some applications, blends of two or more of these thermoplastic polymers may be used.

The adhesive sealant materials described herein can be dry blended and subsequently melt blended in a twin-screw extruder and repletized as is well known in the art. Subsequently these melt-blended resins can be converted and applied by a variety of techniques and processes. For example, the adhesive sealant materials can be converted into a film by cast or slot die extrusion techniques and this adhesive film can be laminated to appropriate substrates such as metals or polyolefins. As an alternative, the adhesive sealant materials can be coextruded with other polyolefins using the adhesive sealant materials of the present invention as a skin layer on either one or both surfaces to produce a more economical adhesive film.

These adhesive films can then be laminated to various substrates by heat activating the adhesive film. Heat activation can occur by a variety of methods including, but not limited to, direct contact with a heated plate or roller, absorption of infrared energy, direct heating in an oven or activation through RF frequency, hot pressing, resistive welding, ultrasonic welding or microwave radiation. In another aspect of the application of this adhesive, this adhesive sealant materials can be directly coated onto a substrate of interest in processes well known in the art, including, for example, extrusion lamination, extrusion coating, coextrusion lamination and coextrusion coating.

The modified polyolefins used as the adhesive sealant materials for sealing and uniting two or more electrochemical cell components may also be optionally reinforced with fibres or inorganic fillers. Such reinforcements can reduce warpage and increase stiffness and strength of the seal in the final unitized cell structure. A blend of Surlyn®, manufactured by E. I. Du Pont de Nemours & Company, Inc. Wilmington, DE, with any of the above mentioned modified polyolefins, such as Bynel®, Fusabond®, can be used to improve the elastic property of the polymer. Use of such a blend has the advantage of providing a sealant material having desired elastic properties along with its inherent sealing properties.

In the assembly of an electrochemical cell, the anode and cathode gas diffusion layers (GDL) occasionally puncture through the membrane and create a short circuit. To prevent this, a woven or non-woven porous matrix of insulating material or non-porous films can be used to separator between the GDL and the membrane. The materials present in the insulating layer are generally non-conductive and should be noncontaminating to the fuel cell and thermally and dimensionally stable at fuel cell operating temperatures. Generally materials with a resistivity of greater than about 10⁴ ohm-cm, and more typically a resistivity of greater than about 10⁶ ohm-cm, and most typically a resistivity of greater than about 10⁹ ohm-cm are considered useful. Examples include woven Fiberglass Cloth, non-woven Kevlar® paper, manufactured by E. I. Du Pont de Nemours & Company, Inc. Wilmington, DE, and non-porous films such as Dartek®, Kapton®, and Mylar® films, manufactured by E.I. DuPont de Nemours & Company, Inc. Wilmington, DE. The adhesive sealant materials of the present invention can be used to impregnate through the porous matrix or bond to the non-porous films to create a seal between the membrane and GDL, and the GDL material will thus be prevented from penetrating through the membrane to cause a short circuit. The reinforcement of the woven or non-woven porous matrix or non-porous film by the adhesive sealant materials enhances the insulating property of the resultant sealing gaskets.

### Antioxidants

To prevent oxidation induced degradation of the adhesive sealant materials in the electrochemical cell environment, which results in inferior physical and mechanical properties, an appropriate amount of antioxidant, such as Ciba® IRGANOX®, IRGAFOS®, or PS802 can be blended with the above-mentioned modified polyolefins. The presence of antioxidant will reduce the oxidative degradation and enhance the durability of the sealing material. Examples of suitable antioxidants include phenolics, secondary amines, phophites and thioesters.

### Plates

The bi-polar separator plates and coolant plates can be made of metal or graphite or moulded from a composition comprising graphite fiber, polymer resin binder and graphite powder. The polymer can be any thermoplastic polymer or any other polymer having characteristics similar to a thermoplastic polymer. The thermoplastic polymers can be melt processible polymers, such as polypropylene, Teflon® FEP and Teflon® PFA, partially fluorinated polymers such as PVDF, Kynar®, Kynar Flex®, Tefzel®, thermoplastic elastomers such as Kalrez®, Viton®, Hytrel®, liquid crystalline polymer such as Zenite®, polyolefins such as Sclair®, polyamides such as Zytel®, aromatic condensation polymers such as polyaryl(ether ketone), polyaryl(ether ether ketone) can be used. Most preferably the polymer is a liquid crystalline polymer resin such as that available from E.I. du Pont de Nemours and Company under the trademark ZENITE®. A blend 1 wt% to 30 wt%, more preferably 5 wt% to 25 wt% of styrene-maleic anhydride with any of the above mentioned thermoplastic polymers, partially fluorinated polymers and liquid crystalline polymer resin and their mixture can be used as binding polymer.

The polymer resin may also be any thermoset polymer, such as phenolic resins, vinyl ester resins, epoxy resins, diallylphalate resins, silicon rubber and polypherrylsulphone resins.

The graphite fiber is preferably a pitch-based graphite fiber having a fiber length distribution range from 15 to 500 µm, a fiber diameter of 8 to 15 µm, bulk density of 0.3 to 0.5 g/cm³ and a real density of 2.0 to 2.2 g/cm³. The graphite powder is preferably a synthetic graphite powder with a particle size distribution range of 20 to 1500 µm, a surface area of 2 to 3 m²/g, bulk density of 0.5 to 0.7 g/cm³ and real density of 2.0 to 2.2 g/cm³. Further detail regarding the composition of the plates is described in U.S. patent no. 6,379,795 B1, which is incorporated herein by reference.

### Sealing of Components

The adhesive sealant materials of the present invention may be used to seal two or more components to each other. For example, the adhesive sealant materials may seal:
a. a cooling separator plate to an adjacent cooling separator plate;
b. a monopolar or bipolar separator plate to an adjacent monopolar or bipolar separator plate;
c. a monopolar or bipolar separator plate to an adjacent cooling separator plate;
d. a monopolar or bipolar separator plate to a polymer electrolytic membrane or a catalyst coated gas diffusion electrode; and
e. a membrane electrode assembly to a monopolar or bipolar separator plate.

In order to promote a strong and durable adhesive bond, the surfaces of the two components may be subjected to surface treatments, such as, chemical grafting, corona/plasma treatment, ion procedure, fluorination, degreasing/sanding/roughening, and flaming procedure. These are done to activate the surface for enhancing the adhesive properties of the adhesive sealant materials. Due to their improved adhesive properties, the modified polyolefin adhesives disclosed in the present invention are capable of providing strong sealing bonds to an untreated surface. No surface treatment is necessary for achieving the desired bonding strength between the two different components of the electrochemical cell.

A single step sealing process, such as heat bonding, heat lamination, resistance welding or hot pressing can be used to seal the components of the electrochemical cell using modified polyolefin materials disclosed in the present invention. Due to the use of only one sealing polymer for creating seals between all the components of the electrochemical cell, it can be subjected to one sealing condition, using a particular temperature and pressure, to create a functional seal among various components.

It will be apparent to one skilled in the art that the adhesive sealant materials for sealing electrochemical cell components to each other provided by the present invention has many applications. They can be used in sealing components of any types of fuel cell and/or electrolyzer cells. These adhesive sealant materials can be used to seal bi-polar plates and coolant plates around their external peripheries, or around the manifold openings of the plates. The adhesive sealant materials are not limited to use in PEM fuel cell stacks, but can also be used in direct methanol fuel cells (DMFC), water electrolyzers and phosphoric acid fuel cells where the integration of the electrochemical cell components are needed.

In another aspect of the present invention, the acid, acid ester, acid anhydride and metallocene modified polyolefin adhesive sealant materials can function as a sealing material on both smooth and coarse sealing surfaces of a plate made of metal, graphite or a composite of graphite and polymer. These adhesive sealant materials have inherent anchoring properties that are created when the adhesive sealant materials are heated during the sealing process. They can anchor to almost any surface morphology of the plates.

The preferred embodiments of the present invention can provide many advantages. For example, the adhesive sealant materials develop adhesion property only when they are heated to a temperature near their melting points; otherwise they behave like a non-sticky polymer at room temperature. This gives significant advantages during the application of the adhesive sealant materials on the desired location of the plate or MEA, as well as being capable of forming gaskets or sealant beads with these materials. The adhesive sealant materials are capable of forming effective seals with multiple electrochemical cell components, such as plate-to-plate, plate-to-MEA, membrane-to-plate, gas diffusion layer-to-membrane, and gas diffusion layer-to-plate. This gives the benefit of using one single sealant material for all the sealing requirements in a cell. Sealant gaskets made of different materials are not required to achieve all of the desired sealing functionalities in an electrochemical cell.

Thus, use of a single adhesive sealant material for all sealing requirements will help to save both time and cost, and will make the process viable to high volume manufacturing. These adhesive sealant materials can be applied as thick gaskets, thin film gaskets, sealant beads or any other configuration, depending on the design of the electrochemical cell. These adhesive sealant materials possess significant adhesion property irrespective of the surface morphology of the component. They can easily adhere to smooth as well as coarse surfaces. They can also be used conveniently to seal through porous substrates, such as gas diffusion layers, to make fluid impermeable edges.

The following examples illustrate the various advantages of the preferred method of the present invention.

### EXAMPLES

### Example 1

Two antioxidants namely, Irganox 1010 and Irganox PS802 were blended with Bynel 4105 according to general compounding and film casting procedure outlined before. Samples were measured for oxidative stability using Oxygen Induction Time ("OIT") test (ASTM D3895-98) at the conditions described below:

### Conditions:

Temperature: 220°C
Atmosphere: Both Air and Oxygen
Equilibrate at 220°C (in nitrogen), isothermal for 5 min, switch purge gas to air/oxygen.
Results are shown graphically below:

As Figure 1 illustrates, there is strong correlation between antioxidant content and OIT results. In both air and oxygen. Irganox 1010 appears more effective in wt% basis than Irganox PS 802. It should be noted however is Irgonox PS 802 is claimed to be more effective upon exposure to hydrolytic conditions.

### Example 2

The strength of sealing materials were tested by joining two manufactured parts (composite plaques) comprising 25% Zenite®, 55% Thermocarb® graphite powder and 20% graphite fibre. The parts had a length of 50 mm, width of 15 mm and a thickness of 2.5 mm.

A thin film of the sealing material, with a thickness of 6 mils (0.152 mm) was placed between two composite plate parts and the sandwiched assembly was placed in a hot press preheated at 170°C. The assembly was heated for 2 minutes without applying any pressure to it. After 2 minutes of heating the pressure was raised to 3 Mpa and the assembly was held under this pressure for another 2 minutes. After this the assembly was held under the pressure of 3 MPa and cooled to 70°C. Once cooled, the pressure was removed and the joined assembly was removed from the hot press.

The strength of the welded joint was measured and tabulated in Table 1.

| **Polymer** | **Seal Strength (MPa)** |
|---|---|
| Profax® SB823 | 0.564 |
| PRIEX® 63208 | 0.967 |
| Fusabond® 511 D | 1.031 |
| PRIEX® 11006 | 1.302 |
| Bynel® 4105 | 1.516 |

The seal strength results in I able 1 are very good. In most of the cases, the plate material broke apart before the plates got delaminated along the bonding surface. Therefore, the bonding appeared as very strong.

### Example 3

Two composite parts comprising 25% Zenite®, 55% Thermocarb® graphite powder and 20% graphite fibre were welded using the resistance welding process. The parts each had a length of 50 mm, a width of 15 mm and a thickness of 2.5 mm.

A jig was made to apply a direct current through two electrodes attached directly to each part. A welding machine was used as a power source. The jig also applied and controlled the pressure on the composite parts. A gas cylinder was used as the source of pressure.

A thin film of the sealing material, with a thickness of 6 mils (0.152 mm) was placed between two composite plate parts and the sandwiched assembly was placed in the jig and a 55-ampere (55 A) current was passed through the parts for approximately 30 seconds. 3 MPa pressure was applied to the plates during the joining process. Good sealing was obtained for Bynel® 4105, Profax® SB823, Fusabond® 511 D and PRIEX® 11006 sealing materials.

Although the present invention has been shown and described with respect to its preferred embodiments and in the examples, it will be understood by those skilled in the art that other changes, modifications, additions and omissions may be made without departing from the substance and the scope of the present invention as defined by the attached claims.

## Claims

1. The use in an electrochemical cell of a heat-activated adhesive sealant material to seal two or more components of the electrochemical cell to each other, wherein the heat-activated adhesive sealant material comprises a polyolefin modified with an acid, an acid anhydride, an acid ester or a metallocene.

2. The use of claim 1, wherein the polyolefin is selected from the group consisting of high density polyethylene (HDPE), linear low density polyethylene (LLDPE), low density polyethylene (LDPE), ultra low density polyethylene (ULDPE), high low density polypropylene (HDPP), low density polypropylene (LDPP), and mixtures thereof.

3. The use of any one of claims 1-2, wherein the heat-activated adhesive sealant material further comprises one or more antioxidants.

4. The use of any one of claims 1-3, wherein the heat-activated adhesive sealant material further comprises woven or non-woven insulation matrix reinforcement, preferably insulation matrix reinforcement selected from the group consisting of woven Fiberglass Cloth, non-woven Kevlar® paper, and non-porous Dartek®, Kapton® or Mylar® films.

5. The use of any one of claims 1-4, wherein the electrochemical cell is a fuel cell.

6. A sub-assembly for use in an electrochemical cell, wherein the sub-assembly comprises at least two components sealed to each other with a heat-activated sealant material comprising a polyolefin modified with an acid, an acid anhydride, an acid ester or a metallocene.

7. The sub-assembly of claim 6, wherein the polyolefin is selected from the group consisting of high density polyethylene (HDPE), linear low density polyethylene (LLDPE), low density polyethylene (LDPE), ultra low density polyethylene (ULDPE), high low density polypropylene (HDPP), low density polypropylene (LDPP), and mixtures thereof.

8. The sub-assembly of claim 7, wherein the polyolefin is crosslinked.

9. The sub-assembly of any one of claims 6-8, wherein the heat-activated adhesive sealant material further comprises one or more antioxidants.

10. The sub-assembly of any one of claims 6-9, wherein the heat-activated adhesive sealant material further comprises an ionomeric polymer blended with the polyolefin.

11. The sub-assembly of any one of claims 6-10, wherein the heat-activated adhesive sealant material further comprises woven or non-woven insulation matrix reinforcement, preferably insulation matrix reinforcement selected from the group consisting of woven Fiberglass Cloth, non-woven Kevlar® paper, and non-porous Dartek®, Kapton® or Mylar® films.

12. The sub-assembly of any one of claims 6-11, wherein the heat-activated adhesive sealant material is stable to oxidation and reduction during operation of the electrochemical cell.

13. The sub-assembly of any one of claims 23-30, wherein the two components comprise a pair of components selected from the group consisting of:
(a) a cooling separator plate and an adjacent cooling separator plate;
(b) a monopolar or bipolar separator plate and an adjacent monopolar or bipolar separator plate;
(c) a monopolar or bipolar separator plate and an adjacent cooling separator plate;
(d) a monopolar or bipolar separator plate and a polymer electrolytic membrane or catalyst coated gas diffusion electrode; and
(e) a membrane electrode assembly and a monopolar or bipolar separator plate.

14. The sub-assembly of claim 13, wherein the separator plates comprise metal, graphite or a composite of graphite and a polymer resin.

15. An electrochemical cell comprising the sub-assembly of any one of claims 6-13.

16. The electrochemical cell of claim 15, wherein the electrochemical cell is a fuel cell.

17. A process for making a sub-assembly for use in an electrochemical cell comprising the step of sealing at least two components to each other with a heat-activated sealant material comprising a polyolefin modified with an acid, an acid anhydride, an acid ester or a metallocene.

18. The process of claim 17, wherein the polyolefin is selected from the group consisting of high density polyethylene (HDPE), linear low density polyethylene (LLDPE), low density polyethylene (LDPE), ultra low density polyethylene (ULDPE), high low density polypropylene (HDPP), low density polypropylene (LDPP), and mixtures thereof.

19. The process of any one of claims 17-18, wherein the heat-activated adhesive sealant material further comprises one or more antioxidants.

20. The process of anyone of claims 17-19, wherein the heat-activated adhesive sealant material further comprises an ionomeric polymer blended with the polyolefin.

21. The process of anyone of claims 17-20, wherein the heat-activated adhesive sealant material further comprises woven or non-woven insulation matrix reinforcement, preferably insulation matrix reinforcement selected from the group consisting of woven Fiberglass Cloth, non-woven Kevlar® paper, and non-porous Dartek®, Kapton® or Mylar® films.

22. The process of anyone of claims 17-21, wherein the electrochemical cell is a fuel cell.
